# FASCICULE DE BREVET EUROPEEN

(11) **EP 4 225 820 B1**
(45) Date de publication et mention de la délivrance du brevet: **28.08.2024**
(21) Numéro de dépôt: 21798077.0
(22) Date de dépôt: 28.09.2021
(51) Int. Cl.: C08G 8/04, C08G 8/06, C09J 161/12

(54) **COMPOSITION ADHESIVE AQUEUSE COMPORTANT UNE RESINE THERMODURCISSABLE A STABILITE AMELIOREE**
WÄSSRIGE KLEBSTOFFZUSAMMENSETZUNG MIT EINEM WÄRMEHÄRTENDEN HARZ MIT VERBESSERTER STABILITÄT
AQUEOUS ADHESIVE COMPOSITION COMPRISING A THERMOSETTING RESIN HAVING IMPROVED STABILITY

(30) Priorité: 09.10.2020 FR 2010333
(43) Date de publication de la demande: 16.08.2023
(73) Titulaire: COMPAGNIE GENERALE DES ETABLISSEMENTS MICHELIN, 63040 Clermont-Ferrand (FR)
(72) Inventeur: DOISNEAU, David, 63040 CLERMONT-FERRAND CEDEX 9 (FR); RODRIGUES, Arnaud, 63040 CLERMONT-FERRAND CEDEX 9 (FR)
(74) Mandataire: M.F.P. Michelin
(86) Numéro de dépôt international: PCT/FR2021/051664
(87) Numéro de publication internationale: WO 2022/074312

(56) Documents cités:
- WO-A1-2017/168109
- US-A- 3 551 365

## Description

Le domaine de la présente invention concerne des compositions adhésives aqueuses destinées à faire adhérer des éléments, l'utilisation et le procédé de fabrication d'une telle composition, le procédé d'assemblage d'éléments au moyen de ces compositions ainsi que les assemblages fabriqués à l'aide de ces compositions.

Les phénoplastes ou « résines phénol-formaldéhyde » (sigle PF) sont issus du formaldéhyde et du phénol. Le phénol étant une molécule présentant plusieurs sites réactifs, il se forme finalement un réseau tridimensionnel. Les phénoplastes sont notamment utilisés en tant qu'adhésifs, par exemple pour la fabrication de bois aggloméré ou de matériaux composites renforcés avec des fibres de verre, fibres textiles, ...

Dans le domaine du bois, une composition de type phénol-aldéhyde est décrite dans US2360376. Cette composition comprend une résine phénol-aldéhyde à base de formaldéhyde et de phénol. Le rapport molaire formaldéhyde sur phénol est compris dans un domaine de valeurs allant de 2 à 3,5. On utilise cette composition dans un procédé de collage d'articles en contreplaqué comprenant plusieurs plis en bois. Au cours de ce procédé, on enduit un ou plusieurs plis d'une couche de la composition, on joint les plis les uns aux autres par l'intermédiaire de la couche de composition et on cuit sous pression les plis ainsi joints. L'assemblage collé ainsi obtenu présente une cohésion élevée grâce aux excellentes propriétés adhésives de la composition.

Toutefois, l'utilisation de formaldéhyde (ou formol), qui plus est en excès par rapport au phénol, entraine la libération de formaldéhyde non seulement lors de la cuisson sous pression mais également lors du stockage et de l'utilisation de l'assemblage collé. Or, en raison de l'évolution récente de la réglementation, notamment de la réglementation européenne sur ce type de composé, on souhaite limiter autant que possible, voire supprimer l'utilisation de formaldéhyde ou de précurseur de formaldéhyde.

Dans sa demande WO2017/168109, la Demanderesse a proposé des compositions adhésives aqueuses pour le collage du bois, comprenant une résine thermodurcissable à base de phloroglucinol et de 5-(hydroxyméthyl)-furfural, présentant des propriétés adhésives élevées et dépourvue de formaldéhyde.

Toutefois, ce nouveau système a pour particularité d'être très réactif. Cette réactivité se traduit par une monté élevée de la viscosité une fois la composition adhésive aqueuse formulée. Ce point précis rend son utilisation délicate lorsque des applications nécessitent une mise en oeuvre de plusieurs dizaines de minutes voire de quelques heures de ces compositions adhésives aqueuses. En d'autres termes le collage d'éléments en bois est possible sur un laps de temps très court.
L'invention a pour but de fournir une composition aqueuse adhésive, comprenant une résine thermodurcissable, présentant des propriétés adhésives élevées, dépourvue de formaldéhyde, et offrant une viscosité plus faiblement évolutive que la composition adhésive du document WO2017/168109.

Or, au cours de ses recherches, la Demanderesse a découvert une composition adhésive aqueuse n'utilisant pas de formol libre, de viscosité peu évolutive dans le temps, qui permet de répondre à l'objectif ci-dessus.

Ainsi, un objet de l'invention concerne une composition adhésive aqueuse, comprenant une résine thermodurcissable à base :
- d'au moins un composé aromatique A1 comprenant au moins un noyau aromatique à 5 ou 6 chaînons porteur d'au moins deux fonctions, l'une de ces fonctions étant une fonction aldéhyde ou une fonction hydroxyméthyle, l'autre étant une fonction aldéhyde ou une fonction hydroxyméthyle;
- d'au moins un polyphénol aromatique A2 comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé organique G choisi dans le groupe constitué par les monosaccharides G1 ou les oligosaccharides G2.

Un autre objet de l'invention concerne l'utilisation de la composition adhésive aqueuse selon l'invention, pour le collage d'au moins deux éléments cellulosiques, avantageusement d'au moins deux éléments en bois.

L'invention concerne également un procédé de collage de deux éléments cellulosiques, avantageusement deux éléments en bois, dans lequel :
- on applique une couche de la composition adhésive aqueuse telle que définie précédemment sur au moins l'un des éléments, et,
- on joint les éléments les uns aux autres par l'intermédiaire de la couche de la composition adhésive aqueuse.

L'invention concerne également un assemblage collé de deux éléments comprenant une couche de la composition adhésive aqueuse telle que définie ci-dessus joignant au moins un des éléments à l'autre.

L'invention ainsi que ses avantages seront aisément compris à la lumière de la description qui suit.

### I - FORMULATION DE LA COMPOSITION ADHESIVE AQUEUSE

Dans la présente description, sauf indication expresse différente, tous les pourcentages (%) indiqués sont des % en masse.

Par "position para l'une par rapport à l'autre", on entendra que les fonctions visées sont à l'opposées l'une de l'autre, c'est-à-dire en positions 1 et 4 du noyau aromatique à 6 chaînons. De façon analogue, "la position para" par rapport à une fonction est une position opposée à la fonction sur le noyau aromatique à 6 chaînons portant la fonction.

Par "en position ortho d'une fonction", on entendra la position occupée par le carbone du noyau aromatique immédiatement adjacent au carbone du noyau aromatique portant la fonction. De façon analogue, "la position ortho" par rapport à une fonction est la position adjacente à la fonction sur le noyau aromatique portant la fonction.

Par "en position méta d'une fonction", on entendra la position occupée par le carbone du noyau aromatique séparé du carbone du noyau aromatique portant la fonction par un unique autre carbone du noyau aromatique. De façon analogue, "la position méta" par rapport à une fonction est la position adjacente à la « fonction ortho » sur le noyau aromatique portant la fonction.

Par "position méta l'une par rapport à l'autre", on entendra que les fonctions visées, par exemple les fonctions hydroxyle dans le polyphénol aromatique, sont portées par des carbones du noyau aromatique séparés l'un de l'autre par un unique autre carbone du noyau aromatique.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

### « CHO » représente la fonction aldéhyde.

### « CH₂OH » représente la fonction hydroxyméthyle.

Le « composé A1 » désigne, dans le cadre de l'invention, le composé aromatique défini au paragraphe 1.1.

Le « composé A2 » désigne, dans le cadre de l'invention, le composé à base de polyphénol aromatique défini au paragraphe I.2.

Le « composé G » désigne, dans le cadre de l'invention, le composé organique G choisi dans le groupe constitué par les monosaccharides G1 ou les oligosaccharides G2 défini au paragraphe I.3.

Le « composé A3 » désigne, dans le cadre de l'invention, le composé à base d'un composé aromatique hydrocarboné défini au paragraphe I.4.

Par « polyphénol aromatique » on entend un composé aromatique comprenant au moins un noyau benzénique porteur de plus d'une fonction hydroxyle.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

Dans le cadre de l'invention, on pourra également envisager que les produits carbonés mentionnés dans la description comprennent des isotopes de certains éléments chimiques.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, du matériau textile, des composites ou articles finis comportant de tels composites, en particulier au cours d'une étape de cuisson.

La composition adhésive aqueuse selon un premier mode de réalisation de l'invention comprend donc au moins une (c'est-à-dire une ou plusieurs) résine thermodurcissable selon l'invention, cette résine thermodurcissable est quant à elle à base d'au moins un (c'est-à-dire un ou plusieurs) composé aromatique, d'au moins un (c'est-à-dire un ou plusieurs) polyphénol aromatique, et à base d'au moins composé organique G choisi dans le groupe constitué par les monosaccharides G1 ou les oligosaccharides G2, constituants qui vont être décrits en détail ci-après.

### 1.1 - Composé aromatique A1

Le premier constituant essentiel de la résine thermodurcissable selon le premier mode de réalisation de l'invention est un composé aromatique comprenant au moins un noyau aromatique porteur d'au moins deux fonctions, l'une de ces fonctions étant une fonction aldéhyde ou une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle ou des fonctions hydroxyméthyle et aldéhyde. Le composé selon l'invention répond donc à la formule générale (I) :

B-Ar-C (I)

où Ar représente un noyau aromatique et B, C représentent respectivement CHO ou CH₂OH.

Le noyau aromatique est un noyau à 5 ou 6 chaînons, comprenant en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;- le noyau aromatique comprend une ou deux fonctions hydroxyméthyle ;
- le noyau aromatique comprend une ou deux fonctions aldéhyde.

Avantageusement, outre les fonctions aldéhyde et hydroxyméthyle, le reste du noyau aromatique n'est pas substitué.

Avantageusement, dans un premier cas, le noyau aromatique comprend :
- une seule fonction aldéhyde ;
- une seule fonction hydroxyméthyle ;
- outre les fonctions aldéhyde et hydroxyméthyle, le reste du noyau aromatique n'est pas substitué.

Avantageusement, dans un deuxième cas, le noyau aromatique comprend :
- deux fonctions hydroxyméthyle ;
- outre les fonctions hydroxyméthyle, le reste du noyau aromatique n'est pas substitué.

Avantageusement,dans un troisième cas, le noyau aromatique comprend :
- deux fonctions aldéhyde ;
- outre les fonctions aldéhyde, le reste du noyau aromatique n'est pas substitué.

Avantageusement, le composé aromatique A1 répond à la formule générale (II) : 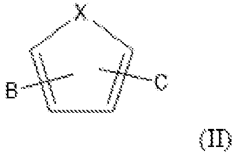 dans laquelle B et C représentent respectivement CHO ou CH₂OH, X représente O, NR₁, NO, S, SO, SO₂, SR₂R₃, R₁, R₂, R₃ représentent chacun, indépendamment l'un de l'autre, un hydrogène, un groupe alkyle, aryle, arylalkyle, alkylaryle ou cycloalkyle.

Dans une première variante, le composé A1 est de formule générale (II') : 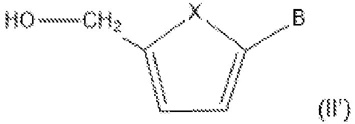 dans laquelle X, B sont tels que définis précédemment.

Dans un mode de réalisation particulièrement avantageux, B représente CHO. Dans un autre mode de réalisation, B représente CH₂OH.

Selon un mode de réalisation préférentiel, X représente O.

Dans ce mode de réalisation, le composé A1 est de formule (Ila) : 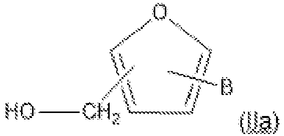
B étant tel que défini précédemment
et plus particulièrement de formule (II'a1) ou (II'a2) :

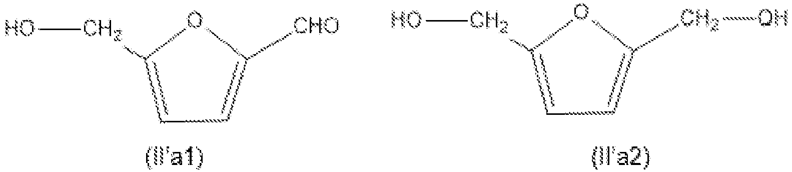

Le 5-(hydroxyméthyl)furfural (II'a1) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans une deuxième variante, le composé A1 est de formule générale (II") : 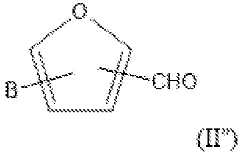
B étant tel que défini précédemment
et plus particulièrement de formule (II"a1) ou (11"a2) :

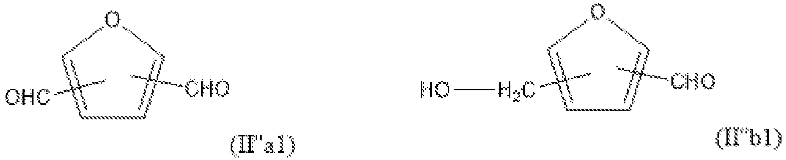

Dans un autre mode de réalisation, X représente NR₁ ou NO, avantageusement NR₁. R₁ est tel que défini précédemment.

Dans une variante, le composé A1 est de formule (IIb) : 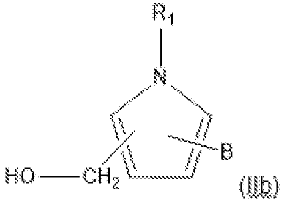
B étant tel que défini précédemment
et plus particulièrement de formule (II'b1) ou (II'b2) : 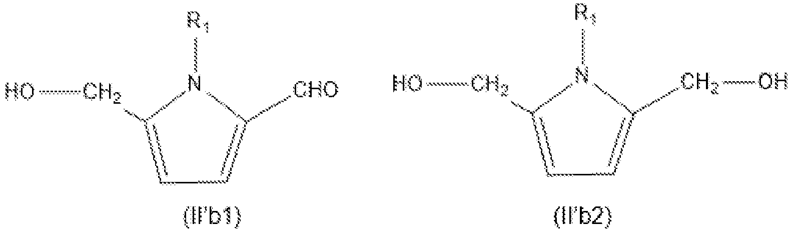
dans lesquelles R₁ représente un hydrogène, un groupe alkyle, aryle, arylalkyle, alkylaryle ou cycloalkyle. Avantageusement R₁ représente un hydrogène ou un groupe alkyle en C₁-C₆.

Dans un autre mode de réalisation, X représente S, SO, SO₂ ou SR₂R₃.

Dans ce mode de réalisation, le composé A1 est de formule (Ilc) :
B étant tel que défini précédemment 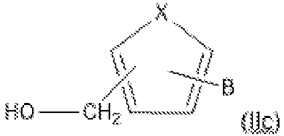
avec X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (II'c1) ou (II'c2) : 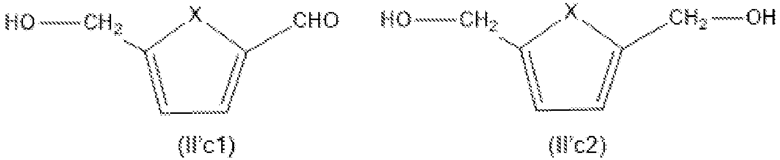
dans laquelle X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé A1 peut ainsi être :

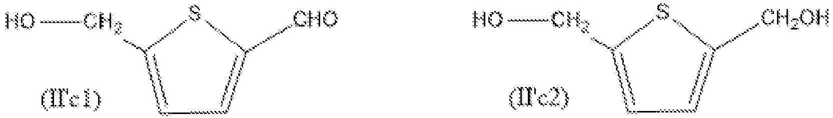

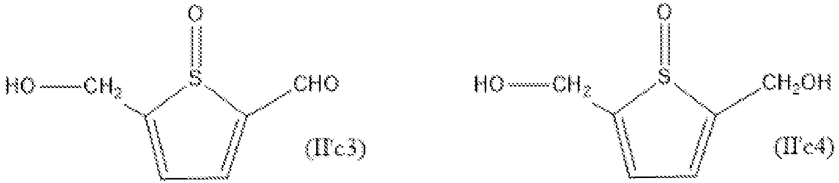

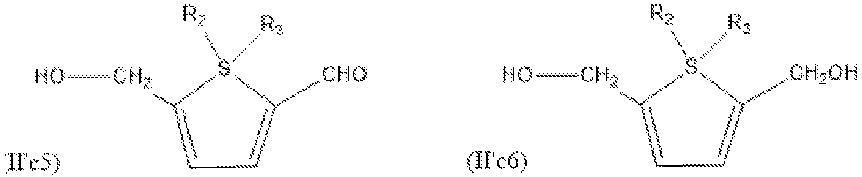

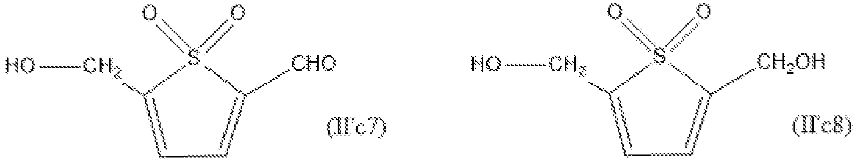

Avantageusement R₂, R₃ représentent chacun, l'un indépendamment de l'autre, un radical alkyle en Ci-Ce.

Le composé A1 est avantageusement de formule (II'c1) ou (II'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

Avantageusement, le composé A1 est de formule générale (III) : 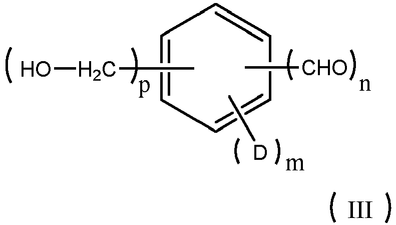 dans laquelle D représente un hydrogène, un alkyle, aryle, arylalkyle, alkylaryle ou cycloalkyle, ou un groupement hydroxyalkyl . Conformément à l'invention, p+n>1 et m<5.

Avantageusement m vaut 0 ou 1.

Avantageusement D représente un hydrogène ou groupement hydroxyméthyl.

Dans une variante, n vaut 1 et p vaut 1.

Dans une autre variante, n vaut 3 et p vaut 0.

Dans une autre variante, n vaut 2 et p vaut 1.

Dans une autre variante, n vaut 1 et p vaut 2.

Dans une autre variante, n vaut 0 et p vaut 2.

Dans une autre variante, n vaut 0 et p vaut 3.

Préférentiellement le noyau aromatique du composé aromatique A1 est un noyau benzénique. Plus préférentiellement, cet aldéhyde est choisi dans le groupe constitué par le 2-hydroxymethyl-benzène-1-carboxaldéhyde, le 3- hydroxymethyl -benzène-1-carboxaldéhyde, le 4-hydroxymethyl-benzène-1-carboxaldéhyde, le 1,2-hydroxymethyl-benzène, le 1,3-hydroxymethyl-benzène, le 1,4-hydroxymethyl-benzène, le 2-Methoxybenzaldéhyde, le 3-Methoxybenzaldéhyde, le 4-Methoxybenzaldéhyde, le 2,6-Diméthoxybenzaldéhyde, le 2,4,6-Triméthoxybenzaldéhyde, et les mélanges de ces composés.

Encore plus préférentiellement le composé aromatique A1 utilisé est le 1-hydroxymethyl-benzène-4-carboxaldéhyde de formule (IIIa) ou le 1,4-hydroxymethyl-benzène de formule (IIIb) ou encore l'acide téréphtalique de formule (III'b):

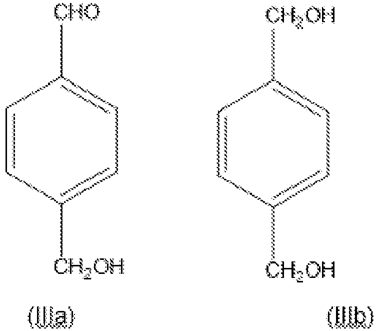

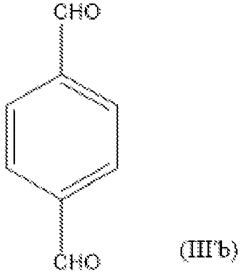

De préférence, lorsque la résine thermodurcissable est à base de polyphénol et d'un ou plusieurs composés de formule (I), la composition est dépourvue de formaldéhyde.

Lorsque la résine thermodurcissable est à base de polyphénol, d'un ou plusieurs composés de formule (I) et d'aldéhydes, chaque aldéhyde est préférentiellement différent du formaldéhyde. La composition est alors également dépourvue de formaldéhyde.

En d'autres termes et de manière préférée, lorsqu'un aldéhyde est présent, le ou chaque aldéhyde de la résine thermodurcissable est différent du formaldéhyde.

Par dépourvue de formaldéhyde, on entend que le taux massique de formaldéhyde en poids total du ou des aldéhydes est inférieur ou égal à 10%, de préférence à 5% et plus préférentiellement à 2%, ces pourcentages correspondant à des traces susceptibles d'être présentes dans le ou les aldéhydes utilisés industriellement.

### 1.2 - Polyphénol aromatique et/ou monophénol aromatique - composés A2

Selon le premier mode de réalisation de l'invention, le deuxième constituant essentiel de la résine thermodurcissable est un polyphénol aromatique A2 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Conformément à l'invention, le composé A2 peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

Conformément à l'invention, le composé A2 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Une telle résine pré-condensée à base de polyphénol aromatique est conforme à la définition du composé A2 et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A2

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le noyau aromatique porteur d'au moins deux fonctions hydroxyles en position méta l'une par rapport à l'autre, les deux positions ortho d'au moins une des fonctions hydroxyles étant non substituée, est un noyau benzénique.

Avantageusement, chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V) :

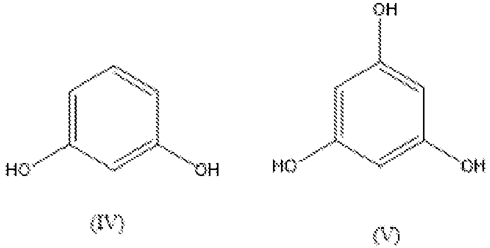

A titres d'exemples, dans le cas où le polyphénol aromatique comporte plusieurs noyaux aromatiques, au moins deux de ces noyaux aromatiques, identiques ou différents, sont choisis parmi ceux de formules générales : 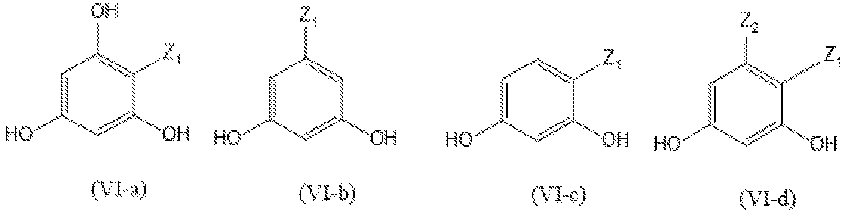 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

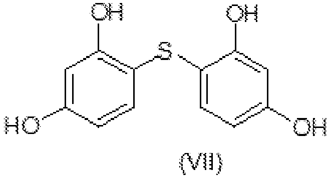

Un autre exemple de polyphénol aromatique est le 2,2',4,4'-tétrahydroxydiphényl benzophénone de formule développée suivante (VIII) :

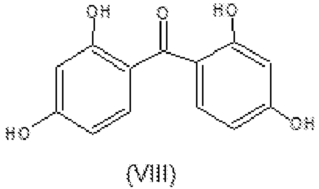

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le composé A2 comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et leurs mélanges ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Le composé susceptible de réagir avec ledit polyphénol aromatique peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment avec au moins un des atomes de carbone du noyau aromatique, qui était non substitué, relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le composé A2 peut également comprendre un mélange d'une molécule libre de polyphénol aromatique et d'une résine pré-condensée à base de polyphénol aromatique, telle que décrite précédemment. En particulier, le composé A2 peut également comprendre un mélange de phloroglucinol et d'une résine pré-condensée à base de phloroglucinol.

### 1.3 - Composé 1.3 - Composé organique G

Selon un premier mode de réalisation de l'invention, le troisième constituant essentiel de la résine thermodurcissable est un composé organique G choisi dans le groupe constitué par les monosaccharides G1 ou les oligosaccharides G2.

Avantageusement, le composé organique G est un sucre. Par sucre, on entend, de façon bien connue de l'homme du métier, un dérivé monosaccharide ou oligosaccharide sous forme cyclique ou ouverte.

Par oligosaccharide, on entend des oligomères formés de 2 à 10 monosaccharides par liaison glycosidique alpha ou beta.

Avantageusement, le composé organique G est choisi dans le groupe constitué des monosaccharides G1 sous forme ouverte.

De préférence, le monosaccharide G1 est choisi dans le groupe constitué par le fructose, le glucose, le xylose, l'erythrose et les mélanges de ces composés.

Avantageusement, l'oligosaccharide G2 est choisi dans le groupe constitué par le saccharose, des oligomères de glucose et de fructose et les mélanges de ces composés.

### 1.4 - Composé aromatique hydrocarboné A3 ou Phénol substitué ou non par un unique groupement alkyle

Avantageusement, dans un deuxième mode de réalisation de l'invention, la composition adhésive aqueuse comprend en outre un phénol substitué ou non par un unique groupement alkyle ou par un unique groupement alcényle et/ou au moins un composé aromatique hydrocarboné A3 comprenant au moins deux noyaux aromatiques porteurs d'une seule fonction hydroxyle, étant entendu qu'au moins une des positions ortho ou para de chaque noyau aromatique est non substituée.

Dans ce deuxième mode de réalisation de l'invention, le quatrième constituant de la résine thermodurcissable est un phénol substitué ou non par un unique groupement alkyle ou par un unique groupement alcényle et/ou au moins un composé aromatique hydrocarboné A3. Le composé aromatique hydrocarboné A3 comprend au moins deux noyaux aromatiques porteurs d'une seule fonction hydroxyle, étant entendu qu'au moins une des positions ortho ou para de chaque noyau aromatique est non substituée.

### Phénol substitué ou non par un unique groupement alkyle ou par un unique groupement alcényle

Avantageusement, le phénol substitué ou non par un unique groupement alkyle est choisi dans le groupe constitué par le phénol, l'ortho crésol, le méta crésol, le para crésol ou un mélange de ces composés.

Avantageusement, le phénol substitué par un unique groupement alcényle est l'alcool coumarylique de formule

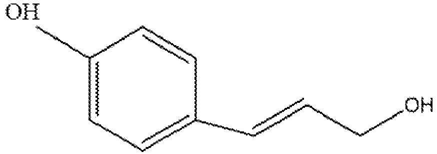

### Composé aromatique hydrocarboné A3

Dans un mode de réalisation préféré, le composé aromatique hydrocarboné A3 répond à la formule générale (X) : 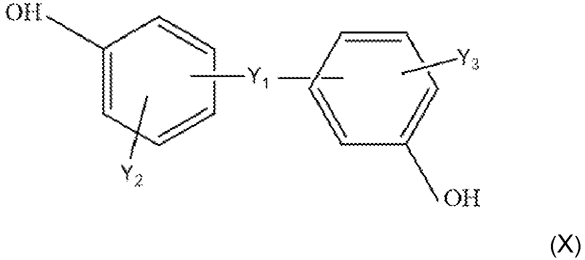 où Y1 représente un groupe alkyle, aryle, arylalkyle, alkylaryle, cycloalkyle ou alcényle, ces groupes étant substitués, Y2 et Y3 sont identiques ou différents et représentent H ou un groupe éther.

Avantageusement, Y2 et Y3 sont en position ortho de la fonction hydroxyle et représentent H ou OY4 où Y4 représente un groupe alkyle, aryle, arylalkyle, alkylaryle, cycloalkyle ou alcényle et de préférence CH3.

Plus préférentiellement, le composé aromatique hydrocarboné A3 comprend au moins deux noyaux aromatiques porteurs d'une seule fonction hydroxyle, étant entendu qu'une des positions ortho de chacun des noyaux aromatiques porteurs d'une seule fonction hydroxyle est non substituée.

Avantageusement, le composé aromatique hydrocarboné A3 est choisi dans le groupe constitué par le bisphénol-A, la lignine et un mélange de ces composés.

### 1.5 Additifs - Fabrication de la composition adhésive aqueuse

La composition adhésive aqueuse conforme au premier et au deuxième mode de réalisation de l'invention peut bien entendu comporter tout ou partie des additifs habituels pour compositions adhésives aqueuses telles que ceux utilisés dans les colles phénoplastes conventionnelles ; on citera par exemple des bases telles que ammoniaque, hydroxyde de sodium, de potassium ou ammonium, des colorants, des charges telles que noir de carbone, silice, craie, grignons d'olive ou toutes autres charges naturelles, antioxydants ou autres stabilisants, des épaississants, par exemple la carboxyméthylcellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Typiquement, lors de la préparation de la résine, on mélange les constituants de la résine thermodurcissable elle-même sans ordre prédéfini mais avantageusement en mélangeant tout d'abord l'eau avec la soude puis le composé organique G, puis le polyphénol aromatique A2 puis le composé aromatique A1 pour le premier mode de réalisation selon l'invention ou avantageusement en mélangeant tout d'abord l'eau avec la soude puis le composé organique G,puis le phénol substitué ou non par un unique groupement alkyle et/ou au moins un composé aromatique hydrocarboné A3 puis le polyphénol aromatique A2 puis le composé aromatique A1 pour le premier mode de réalisation selon l'invention.

La réalisation de la résine thermodurcissable peut être réalisée à un pH compris entre 9 et 14, plus préférentiellement entre 10 et 12.

Ainsi, la résine thermodurcissable selon un premier mode de réalisation est obtenue par mélangeage :
- du composé aromatique A1,
- du polyphénol aromatique A2 ; et
- du composé organique G choisi dans le groupe constitué par les monosaccharides G1 ou les oligosaccharides G2 ;
dans un solvant basique ayant de préférence un pH compris entre 9 et 14, plus préférentiellement entre 10 et 12.

Ainsi, la résine thermodurcissable selon un deuxième mode de réalisation est obtenue par mélangeage :
- du composé aromatique A1,
- du polyphénol aromatique A2 ;
- du composé organique G choisi dans le groupe constitué par les monosaccharides G1 ou les oligosaccharides G2 ; et
- du phénol substitué ou non par un unique groupement alkyle ou par un unique groupement alcényle et/ou du composé aromatique A3
dans un solvant basique ayant de préférence un pH compris entre 9 et 14, plus préférentiellement entre 10 et 12.

Dans certains cas, par exemple à des concentrations relativement élevées, l'homme du métier peut être amené à ajouter un épaississant, par exemple la carboxyméthylcellulose, ou un gélifiant, afin de limiter la sédimentation du polyphénol aromatique A2.

Dans ce mode de réalisation, on mélange une quantité molaire n2 de polyphénol aromatique A2 et une quantité molaire n1 du composé aromatique A1 telles que 0,3≤(n2*N2)/(n1*N1)≤3 et de préférence 0,5<n2*N2)/(n1*N1)≤2.

La quantité de composé organique G selon le premier ou le deuxième mode de réalisation de l'invention de type monosaccharide G1 par exemple : les cétoses (le Fructose en C6) ou les aldoses (l'érythrose en C4, le xylose en C5, le glucose en C6) ou les oligosaccharides G2 (par exemple le saccharose) sera ajustée en fonction de la réactivité désirée par l'homme de l'art. Typiquement le rapport massique du composé G sur le polyphénol A2 sera compris entre 1% et 99%, préférentiellement entre 30% et 90% du composé aromatique A2, plus préférentiellement entre 40% et 80%, encore plus préférentiellement entre 50% et 70%.

La quantité de phénol substitué ou non par un unique groupement alkyle ou au moins un composé aromatique hydrocarboné A3 selon le deuxième mode de réalisation de l'invention sera ajustée en fonction de la viscosité cible désirée par l'homme de l'art. Typiquement le rapport massique de phénol substitué ou non par un unique groupement alkyle ou au moins un composé aromatique hydrocarboné A3 sur le monophénol A2 sera compris entre 1% et 99%, préférentiellement entre 20% et 80% du composé aromatique A2, plus préférentiellement entre 30% et 70%, encore plus préférentiellement entre 40% et 60%.

La concentration de la composition peut être ajustée en fonction de son utilisation spécifique (temps d'ouverture, viscosité).

Avantageusement, dans la composition adhésive aqueuse finale ainsi préparée, le taux d'extrait sec de résine thermodurcissable selon l'invention va de 5 à 80 %, plus préférentiellement de 10 à 60 % en poids de l'extrait sec de composition adhésive.

Dans le cas où l'application finale de la composition adhésive nécessite une viscosité plus forte, l'homme de l'art saura ajuster les caractéristiques finales de viscosité de la composition adhésive en ajoutant à celle-ci un épaississant ou bien tout type des charges connus (par exemple de la poudre de noyaux d'olive et/ou de la craie).

La composition pourra être utilisée immédiatement ou bien stockée à température ambiante (23°C) pendant un temps de maturation pouvant varier typiquement de une à plusieurs heures voire plusieurs jours, avant son utilisation finale, l'homme de l'art déterminera en fonction de la concentration de la composition le temps de stockage possible.

De préférence, la teneur en eau de la composition adhésive aqueuse va de 20 à 95% en poids, de préférence de 40 à 90% en poids.

Par taux d'extrait sec total de la composition adhésive, on entend le rapport entre la masse de résidu obtenue après séchage de la composition adhésive sur la masse de la composition adhésive avant séchage.

Par taux d'extrait sec de la résine thermodurcissable, on entend le rapport entre la masse de la résine thermodurcissable obtenue après séchage de la composition adhésive sur la masse de la composition adhésive avant séchage.

Ces deux taux d'extrait sec sont mesurés conformément à la norme NF EN 827 (mars 2006).

Par teneur en eau de la composition adhésive aqueuse, on entend le poids en eau par rapport au poids total de la composition adhésive.

### II - ASSEMBLAGE COLLÉ DE L'INVENTION

### 11.1 - Définitions ; exemples

Comme indiqué précédemment, la présente invention concerne également l'utilisation de la composition adhésive aqueuse précédemment décrite, pour le collage d'au moins deux éléments cellulosiques, avantageusement d'au moins deux éléments en bois.

Ainsi, un assemblage collé de deux éléments selon l'invention comprend une couche de la composition adhésive aqueuse telle que décrite précédemment joignant les deux éléments l'un à l'autre.

Dans un mode de réalisation, ces deux éléments sont en bois.

Par bois, on entend le tissu végétal issu de plantes ligneuses. Des exemples de tissu végétal sont le tronc, les branches et les racines. Par exemple, les plantes ligneuses dont sont issues le tissu végétal sont le chêne, le châtaignier, le frêne, le noyer, le hêtre, le peuplier, le sapin, le pin, l'olivier, l'aulne ou encore le bouleau.

On pourra également utiliser la colle pour le collage d'éléments réalisés dans des matériaux différents du bois, par exemple les matières plastiques, par exemple les matières thermodurcissables ou thermoplastique, les textiles, les matières minérales ou les mélanges de ces matériaux, y compris avec le bois

Par élément, on entend toute particule ou morceau monolithique. Des exemples d'éléments en bois sont des plis destinés à former un assemblage contreplaqué, des lattis destinés à former un assemblage latté, des particules telles que des copeaux, de la sciure, de la farine ou des flocons, pour former un assemblage aggloméré, que les particules soient orientées ou non, des fibres destinées à former un assemblage de fibres tel qu'un panneau haute ou moyenne densité, des morceaux de bois massif, également appelés bois d'oeuvre, destinés à former des assemblages tels que des meubles, des charpentes.

Avantageusement, les éléments en bois peuvent être des placages de bois, des lamelles de bois, des fibres de bois, des particules de bois ou un mélange de ces composés.

### II.2 - Fabrication de l'assemblage collé

L'assemblage collé de l'invention peut être préparé selon un procédé de collage d'au moins deux éléments cellulosiques, avantageusement deux éléments en bois, dans lequel :
- on applique une couche de la composition adhésive aqueuse selon l'invention sur au moins l'un des éléments, et,
- on joint les éléments les uns aux autres par l'intermédiaire de la couche de la composition adhésive aqueuse.

L'étape d'application de la composition adhésive sur l'un ou les éléments peut être réalisée selon toute méthode appropriée, notamment par toute technique d'enduction connue telle que par exemple pulvérisation, imprégnation, injection sous pression ou encore par une combinaison d'une ou plusieurs de ces techniques.

On pourra, par exemple pour des placages de bois, préférentiellement utiliser un taux de composition adhésive aqueuse allant de 50 à 400 gr.m⁻² et de préférence de 70 à 300 gr.m⁻². L'homme de l'art saura adapter le grammage de composition adhésive aqueuse à ses éléments en bois et à son propre procédé.

Après l'étape d'application de la composition adhésive, on procède à une étape de cuisson : l'assemblage collé est chauffé à une température allant de 30°C à 250°C, de préférence de 50°C à 200°C, très préférentiellement de 80°C à 160°C en fonctions des applications visées. Ce traitement thermique vise à éliminer tout solvant ou eau et à réticuler la résine thermodurcissable. Selon les domaines d'application, le traitement thermique pourra être conduit en deux temps : un premier traitement thermique visant à éliminer tout solvant ou eau, un deuxième traitement thermique visant à finir la réticulation de la résine thermodurcissable.

Dans un premier mode de réalisation, les éléments joints par la composition adhésive sont soumis à une étape de cuisson par vapeur d'eau, avantageusement à une température supérieure ou égale à 100°C.

Dans une deuxième mode de réalisation, les éléments joints par la composition adhésive sont soumis à une étape de cuisson par contact avec les plateaux d'une presse de cuisson, avantageusement à une température supérieure ou égale à 80°C.

Dans un troisième mode de réalisation, les éléments joints par la composition adhésive sont soumis à une étape de cuisson par haute fréquence, avantageusement allant de 300 GHz à 300 MHz.

De préférence, l'assemblage collé est maintenu sous pression, par exemple sous une pression allant jusqu'à 18 Kg.cm⁻². Plus préférentiellement, l'étape de maintien sous pression est réalisée simultanément avec l'étape de chauffage.

La durée de l'étape de chauffage et/ou de maintien sous pression varie de quelques minutes à quelques heures selon les cas, notamment en fonction du couple température-pression utilisé.

Dans un mode de réalisation, les deux éléments à assembler sont en bois.

L'homme du métier saura ajuster, le cas échéant, la température et la durée du traitement thermique ci-dessus, en fonction des conditions particulières de mise en oeuvre de l'invention, notamment de la nature exacte de l'élément. En particulier, l'homme du métier aura avantage à réaliser des balayages en température et durée de traitement ainsi que des balayages de grammage de composition adhésive aqueuse, de manière à rechercher, par approches successives, les conditions opératoires conduisant aux meilleurs résultats d'adhésion et de viscosité pour chaque mode de réalisation particulier de l'invention.

### III - EXEMPLES DE REALISATION DE L'INVENTION ET TESTS COMPARATIFS

Ces essais démontrent que la performance de collage de deux éléments de bois avec une composition adhésive aqueuse selon l'invention est équivalente et la réactivité, c'est-à-dire la variation de viscosité à 20°C, de la composition adhésive aqueuse selon l'invention est moindre par rapport à une composition adhésive conventionnelle sans formol.

Pour cela treize compositions adhésives aqueuses ont été préparées, sept conformément au premier mode de réalisation de l'invention (notées ci-après C-2 à C-8), cinq conformément au deuxième mode de réalisation de l'invention (notées ci-après F-1 à F-3, G-1 et S-1) et une non conformément à l'invention (composition témoin notée ci-après C-1). Leurs formulations (exprimées en pourcentage en poids) sont présentées dans les tableaux 1 et 2 ci-dessous. Les quantités répertoriées dans ce tableau sont celles des constituants à l'état sec, ramenées à un total de 100 parties en poids de composition adhésive aqueuse (c'est-à-dire les constituants et l'eau).

La composition adhésive C-1 est une composition témoin à base de 5-(hydroxyméthyl)-furfural et de phloroglucinol.

Les compositions adhésives C-2 et C-7 sont des compositions adhésives aqueuses selon le premier mode de réalisation de l'invention à base de 5-(hydroxyméthyl)-furfural, de phloroglucinol et de fructose.

La composition adhésive C-3 est une composition adhésive aqueuse selon le premier mode de réalisation de l'invention à base de 5-(hydroxyméthyl)-furfural, de phloroglucinol et de glucose.

La composition adhésive C-4 est une composition adhésive aqueuse selon le premier mode de réalisation de l'invention à base de 5-(hydroxyméthyl)-furfural, de phloroglucinol et de xylose.

La composition adhésive C-5 est une composition adhésive aqueuse selon le premier mode de réalisation de l'invention à base de 5-(hydroxyméthyl)-furfural, de phloroglucinol et d'erythrose.

Les compositions adhésives C-6 et C-8 sont des compositions adhésives aqueuses selon le premier mode de réalisation de l'invention à base de 5-(hydroxyméthyl)-furfural, de phloroglucinol et de saccharose.

La composition adhésive F-1 est une composition adhésive aqueuse selon le deuxième mode de réalisation de l'invention à base de 5-(hydroxyméthyl)-furfural, de phloroglucinol, de fructose et de phénol.

La composition adhésive F-2 est une composition adhésive aqueuse selon le deuxième mode de réalisation de l'invention à base de 5-(hydroxyméthyl)-furfural, de phloroglucinol, de fructose et de bisphénol-A.

La composition adhésive F-3 est une composition adhésive aqueuse selon le deuxième mode de réalisation de l'invention à base de 5-(hydroxyméthyl)-furfural, de phloroglucinol, de fructose et de lignine lignosulfonate de sodium.

La composition adhésive G-1 est une composition adhésive aqueuse selon le deuxième mode de réalisation de l'invention à base de 5-(hydroxyméthyl)-furfural, de phloroglucinol, de glucose et de lignine lignosulfonate de sodium.

La composition adhésive S-1 est une composition adhésive aqueuse selon le deuxième mode de réalisation de l'invention à base de 5-(hydroxyméthyl)-furfural, de phloroglucinol, de saccharose et de lignine lignosulfonate de sodium.

### Protocole de réalisation de la composition adhésive aqueuse

Dans un ballon de 250 mL muni d'un système d'agitation mécanique on introduit le composé organique G puis le composé aromatique A1 (par exemple le 5-hydroxyméthyl fufural) et la soude. On agite de 1 min à 60 min pour homogénéiser (par exemple à 250 tours par minute). Puis, on ajoute le composé A2 (par exemple le phloroglucinol) et on agite par exemple de 1 min à 60 min pour homogénéiser (par exemple à 250 tours par minute). On obtient alors un mélange 1 de la composition adhésive aqueuse selon le premier mode de réalisation. Pour obtenir un mélange 2 de la composition adhésive aqueuse selon le deuxième mode de réalisation, on ajoute ensuite le phénol substitué ou non par un unique groupement alkyle substitué ou non ou au moins un composé aromatique hydrocarboné A3 (par exemple le phénol et/ou le bisphénol-A et/ou la lignine lignosulfonate de sodium). Le mélange 1 ou 2 ainsi formé est mis sous agitation pour une durée allant de 1 min à 60 min, et pour une température allant de 20°C à 90°C. On ajoute à la composition les charges techniques précédemment décrites. On attend, en fonction des constituants ajoutés (que l'homme de l'art saura déterminer), entre 5 et 15 minutes sous agitation à température ambiante. A l'issu de ce temps la composition adhésive aqueuse selon le premier ou deuxième mode de réalisation de l'invention est prête à être utilisée.

**[Tableau 1]**

| **Compositions adhésives** | **C-1** | **C-2** | **C-3** | **C-4** | **C-5** | **C-6** | **C-7** | **C-8** |
|---|---|---|---|---|---|---|---|---|
| A1 : composé aromatique | | | | | | | | |
| 5-(hydroxyméthyl)-furfural (1) | 24.6 | 7.4 | 7.4 | 7.4 | 7.4 | 7.4 | 6.6 | 6.6 |

| A2 : Polyphénol aromatique : | | | | | | | | |
|---|---|---|---|---|---|---|---|---|
| Phloroglucinol (2) | 9.8 | 9.8 | 9.8 | 9.8 | 9.8 | 9.8 | 9.8 | 9.8 |

| Composé G | | | | | | | | |
|---|---|---|---|---|---|---|---|---|
| Fructose (3) | - | 17.2 | - | - | - | - | 17.2 | - |
| Glucose (4) | - | - | 17.2 | - | - | - | - | - |
| Xylose(5) | - | - | - | 17.2 | - | - | - | - |
| Erythrose (6) | - | - | - | - | 17.2 | - | - | - |
| Saccharose (7) | - | - | - | - | - | 17.2 | - | 17.2 |
| Hydroxyde de sodium (8) | 0.62 | 0.62 | 0.62 | 0.62 | 0.62 | 0.62 | 0.62 | 0.62 |
| Poids total d'extrait sec de composition adhésive | 66,7 | 66,7 | 66,7 | 66,7 | 66,7 | 66,7 | 66,7 | 66,7 |
| Poids d'eau | 31.6 | 31.6 | 31.6 | 31.6 | 31.6 | 31.6 | 31.6 | 31.6 |

| Autres charges | | | | | | | | |
|---|---|---|---|---|---|---|---|---|
| Poudre de Noyaux d'olives (9) | 8.3 | 8.3 | 8.3 | 8.3 | 8.3 | 8.3 | 8.3 | 8.3 |
| Craie (10) | 25.0 | 25.0 | 25.0 | 25.0 | 25.0 | 25.0 | 25.0 | 25.0 |
| Total | 100. 0 | 100. 0 | 100. 0 | 100. 0 | 100. 0 | 100. 0 | 100. 0 | 100. 0 |

| | | | | | | | | |
|---|---|---|---|---|---|---|---|---|
| 1) HMF (de la société Aldrich ; de pureté > 99%) ; 2) Phloroglucinol (de la société Alfa Aesar ; de pureté 99%) ; 3) Fructose 99% de la société Aldrich ; 4) Glucose 99% de la société Aldrich ; 5) Xylose 99% de la société Aldrich ; 6) Erythrose 75% de la société Aldrich ; 7) Saccharose 99.5% de la société Aldrich ; 8) Hydroxyde de sodium (de la société Aldrich ; dilué à 30%). 9) Noyaux d'olive de la société Provençale; 10) Craie de la société Lignoblast. | | | | | | | | |

**[Tableau 2]**

| **Compositions adhésives** | **C-1** | **F-1** | **F-2** | **F-3** | **G-1** | **S-1** |
|---|---|---|---|---|---|---|
| 5-(hydroxyméthyl)-furfural (1) | 24.6 | 7.4 | 7.4 | 7.4 | 7.4 | 7.4 |
| Phloroglucinol (2) | 9.8 | 4.9 | 4.9 | 4.9 | 4.9 | 4.9 |
| Fructose (3) | - | 17.2 | 17.2- | 17.2 | - | - |
| Glucose (4) | - | - | - | - | 17.2 | - |
| Saccharose (5) | - | - | - | - | - | 17.2 |
| Phénol (6) | - | 4.9 | | - | - | - |
| Bisphenol-A (7) | - | - | 4.9 | - | - | - |
| Lignine (8) | - | - | - | 4.9 | 4.9 | 4.9 |
| Hydroxyde de sodium (9) | 0.62 | 0.62 | 0.62 | 0.62 | 0.62 | 0.62 |
| Poids total d'extrait sec de composition adhésive | 66,7 | 66,7 | 66,7 | 66,7 | 66,7 | 66,7 |
| Poids d'eau | 31.6 | 31.6 | 31.6 | 31.6 | 31.6 | 31.6 |
| Poudre de Noyaux d'olives (10) | 8.3 | 8.3 | 8.3 | 8.3 | 8.3 | 8.3 |
| Craie (11) | 25.0 | 25.0 | 25.0 | 25.0 | 25.0 | 25.0 |
| Total | 100.0 | 100.0 | 100.0 | 100.0 | 100.0 | 100.0 |

| | | | | | | |
|---|---|---|---|---|---|---|
| 1) HMF (de la société Aldrich ; de pureté > 99%) ; 2) Phloroglucinol (de la société Alfa Aesar ; de pureté 99%) ; 3) Fructose 99% de la société Aldrich ; 4) Glucose 99% de la société Aldrich ; 5) Saccharose 99.5% de la société Aldrich ; 6) Phénol 99,5% de la société Aldrich ; 7) Bisphénol-A 99% de la société Aldrich ; 8) Lignine lignosulfonate de la société Aldrich ; 9) Hydroxyde de sodium (de la société Aldrich ; dilué à 30%). 10) Noyaux d'olive de la société Provencale; 11) Craie de la société Lignoblast. | | | | | | |

### Test de viscosité

A l'issue de la préparation des différentes compositions adhésives aqueuses on mesure la viscosité à différents intervalles de temps. La viscosité est mesurée en utilisant un viscosimètre du type Viscosimètre Brookfield et les mobiles adaptés aux viscosités cibles à l'aide du protocole suivant : on transvase l'échantillon dans la chambre thermostatée jusqu'à environ 150 mL (graduation bécher intérieur) en évitant la formation de bulles d'air, on laisse l'échantillon se réguler à la température de mesure de 20°C pendant le temps indiqué soit 1 à 20 minutes selon la température de départ de la composition, on sélectionner la vitesse, par exemple 60 rpm et on met le mobile en rotation, on attend que l'axe soit stabilisé (1 minute) avant de faire la première lecture et on lit le résultat sur l'affichage digital (viscosité en cP).

Les résultats des tests effectués sur les compositions sont résumés dans les tableaux 3 et 4 ci-dessous.

### Protocole de réalisation de l'éprouvette

La qualité de la liaison entre les éléments de bois est déterminée par un test dans lequel on mesure la force nécessaire pour séparer deux éléments de bois l'un de l'autre par destruction de la couche joignant les deux éléments.

Plus précisément, chaque éprouvette de test comprend trois éléments de bois, en l'espèce du hêtre de masse volumique égale à 0,83 g.cm-3, présentant chacun une forme générale parallélépipédique de dimensions 17 cm x 17 mm x 2,5 mm. Sur un des côtés du premier et du troisième élément en bois, on applique une couche de la composition adhésive aqueuse sur toute la largeur du premier et du troisième élément. Puis, on joint les trois éléments par l'intermédiaire des couches de composition appliquées sur les premier et troisième éléments de bois. La surface totale encollée de l'éprouvette formée par les trois éléments de bois est donc de 225 cm². La composition de l'éprouvette ainsi formée est cuite par exemple pendant 300 secondes à 160 °C.

A l'issue de la cuisson, l'éprouvette ainsi constituée des trois éléments joints par collage est mise en place dans les mâchoires d'une machine de traction, puis tractée à une vitesse et une température donnée (par exemple, dans le cas présent, à 1,5 mm/min et 20°C).

La découpe des éprouvettes a été réalisée selon la norme NF EN 326.1 (1994) « Panneau à base de bois - Echantillonnage, découpe et contrôle - Partie 1 : Echantillonnage et découpe des éprouvettes, et expressions des résultats d'essais ».

On caractérise les niveaux d'adhésion en mesurant la force dite d'arrachage (performance adhésive en MPa) pour disjoindre les trois éléments les uns des autres via une cassure de la couche de collage. Toute valeur d'arrachage supérieure ou égale à 1 MPa est considérée comme bonne. Les résultats sont donnés en base 100 par rapport à la composition témoin C-1. Un résultat supérieur à 60 est considéré comme bon car représentant une force d'arrachage supérieure à 1MPa.

On caractérise l'évolution de viscosité des compositions adhésives à 20°C en fonction du temps (en centipoise). Les résultats sont donnés en base 100 par rapport à chaque composition au temps T0 pour se rendre compte de l'évolution de la viscosité dans le temps de chaque composition.

Les résultats des tests effectués sur les éprouvettes sont résumés dans les tableaux 3 et 4 ci-dessous.

**[Tableau 3]**

| **Compositions adhésives** | **C-1** | **C-2** | **C-3** | **C-4** | **C-5** | **C-6** | **C-7** | **C-8** |
|---|---|---|---|---|---|---|---|---|
| **Tests d'adhésion** | | | | | | | | |
| Performance adhésive | 100 | 106 | 63 | 94 | 125 | 144 | 88 | 131 |

| **Evolution de la viscosité en base 100 à 20°C en fonction du temps** | | | | | | | | |
|---|---|---|---|---|---|---|---|---|
| T0 | 100 | 100 | 100 | 100 | 100 | 100 | 100 | 100 |
| T1 = 10 minutes | 150 | 123 | 104 | 146 | 130 | 130 | 108 | 110 |
| T2 = 20 minutes | 600 | 144 | 109 | 152 | 158 | 137 | 113 | 126 |
| T3 = 30 minutes | 5000 | 154 | 123 | 184 | 203 | 135 | 116 | 127 |
| T4 = 40 minutes | | 163 | 154 | 217 | 263 | 152 | 119 | 127 |
| T5 = 50 minutes | | 200 | 216 | 271 | 394 | 167 | 121 | 127 |
| T6 = 60 minutes | | 245 | 360 | 369 | 556 | 169 | 124 | 128 |
| T7 = 70 minutes | | 340 | 631 | 529 | 660 | 194 | 128 | 128 |
| T8 = 80 minutes | | 531 | | 743 | 931 | 221 | 148 | 132 |
| T9 = 90 minutes | | | | | 1173 | 248 | 174 | 136 |
| T10 = 100 minutes | | | | | 1671 | 324 | 215 | 154 |
| T11 = 110 minutes | | | | | | 409 | 272 | 171 |
| T12 = 120 minutes | | | | | | 590 | 350 | 198 |
| T13 = 130 minutes | | | | | | | 515 | 229 |
| T14 = 140 minutes | | | | | | | | 285 |
| T15 = 150 minutes | | | | | | | | 357 |
| T16 = 160 minutes | | | | | | | | 458 |

**[Tableau 4]**

| **Compositions adhésives** | **C-1** | **F-1** | **F-2** | **F-3** | **G-1** | **S-1** |
|---|---|---|---|---|---|---|
| **Tests d'adhésion** | | | | | | |
| Performance adhésive | 100 | 119 | 144 | 113 | 69 | 106 |

| **Evolution de la viscosité en base 100 à 20°C en fonction du temps** | | | | | | |
|---|---|---|---|---|---|---|
| T0 | 100 | 100 | 100 | 100 | 100 | 100 |
| T1 = 10 minutes | 150 | 102 | 102 | 102 | 153 | 125 |
| T2 = 20 minutes | 600 | 106 | 105 | 142 | 175 | 158 |
| T3 = 30 minutes | 5000 | 111 | 110 | 184 | 222 | 222 |
| T4 = 40 minutes | | 115 | 119 | 324 | 393 | 353 |
| T5 = 50 minutes | | 120 | 129 | 684 | 1200 | 681 |
| T6 = 60 minutes | | 142 | 176 | 1974 | 2067 | 2257 |
| T7 = 70 minutes | | 173 | 200 | | | |
| T8 = 80 minutes | | 252 | 229 | | | |
| T9 = 90 minutes | | 534 | 286 | | | |
| T10 = 100 minutes | | 1534 | 400 | | | |
| T11 = 110 minutes | | | 700 | | | |
| T12 = 120 minutes | | | 3929 | | | |

On constate que, comme l'assemblage réalisé avec la composition C-1, les assemblages collés avec les compositions adhésives C-2 à C-8 selon le premier mode de réalisation de l'invention et les compositions adhésives F-1 à F-3, G-1 et S-1 selon le deuxième mode de réalisation de l'invention présentent une force d'arrachage supérieure à 60. Elles possèdent donc un niveau d'adhésion bon voire supérieur à la composition témoin C-1.

Concernant les caractéristiques de viscosité des compositions adhésives, on peut remarquer que la composition C-1 a une viscosité qui évolue très vite. Elle évolue à 600 % en 20 minutes à 20°C. Concernant les caractéristiques de viscosité des compositions adhésives C-2 à C-8 selon le premier mode de réalisation de l'invention et les compositions adhésives F-1 à F-3, G-1 et S-1 selon le deuxième mode de réalisation de l'invention, on observe que les viscosités évoluent plus lentement que la composition témoin C-1. Les 600% sont atteints au-delà des 20 minutes et bien au-delà des 40 minutes.

On constate que l'assemblage collé avec les compositions adhésives C-2 à C-8 selon le premier mode de réalisation de l'invention et les compositions adhésives F-1 à F-3, G-1 et S-1 selon le deuxième mode de réalisation de l'invention présente une montée en viscosité plus faible que la composition témoin C-1 tout en maintenant d'une manière inattendue pour l'homme du métier une bonne adhésion pour les compositions C-2 à C-4, C-7, G-1 et S-1 et une adhésion améliorée pour les compositions C-5, C-6, C-8, F1, F-2, F3.

### IV- AUTRES EXEMPLES DE REALISATION DE L'INVENTION ET TESTS COMPARATIFS

Trois autres compositions adhésives aqueuses ont été préparées, une conformément au premier mode de réalisation de l'invention, une conformément au deuxième mode de réalisation de l'invention (notées ci-après H-1 et I-1), et une non conformément à l'invention (composition témoin notée ci-après C'-1). Leurs formulations (exprimées en pourcentage en poids) sont présentées dans les tableaux 5 et 6 ci-dessous. Les quantités répertoriées dans ce tableau sont celles des constituants à l'état sec, ramenées à un total de 100 parties en poids de composition adhésive aqueuse (c'est-à-dire les constituants et l'eau).

La composition adhésive C'-1 est une composition témoin à base de téréphtaldéhyde et de phloroglucinol.

La composition adhésive H-1 est une composition adhésive aqueuse selon le premier mode de réalisation de l'invention à base de téréphtaldéhyde, de phloroglucinol et de fructose.

La composition adhésive I-1 est une composition adhésive aqueuse selon le deuxième mode de réalisation de l'invention à base de téréphtaldéhyde, de phloroglucinol, de fructose et de phénol.

Le protocole de réalisation des compositions adhésives est le même que celui décrit plus haut.

**[Tableau 5]**

| **Compositions adhésives** | **C'-1** | **H-1** | **1-1** |
|---|---|---|---|
| Téréphtaldéhyde (1) | 13,6 | 10,4 | 10,4 |
| Phloroglucinol (2) | 18,2 | 18,2 | 9,1 |
| Fructose (3) | - | 3,2 | 3,2 |
| Phénol (4) | - | - | 9,1 |
| Hydroxyde de sodium (5) | 7,6 | 7,6 | 7,6 |
| Eau de la résine | 61,5 | 61,5 | 61,5 |
| Poids total d'extrait sec de composition adhésive | 39,4 | 39,4 | 39,4 |
| Total | 100 | 100 | 100 |

| | | | |
|---|---|---|---|
| 1) Téréphtaldéhyde 99% (de la société Aldrich) ; 2) Phloroglucinol (de la société Alfa Aesar ; de pureté 99%) ; 3) Fructose 99% de la société Aldrich ; 4) Phénol 99,5% de la société Aldrich ; 5) Hydroxyde de sodium (de la société Aldrich ; dilué à 30%). | | | |

A l'issue de la préparation des différentes compositions adhésives aqueuses on mesure la viscosité à 60°C à différents intervalles de temps selon le même protocole que celui décrit plus haut.

Les résultats des tests effectués sur les compositions sont résumés dans le tableau 6 ci-dessous.

**[Tableau 6]**

| **Evolution de la viscosité en base 100 à 60°C en fonction du temps** | | | |
|---|---|---|---|
| **Temps** | **C-1** | **H-1** | **1-1** |
| T0 = 0 minute | 100 | 100 | 100 |
| T1 = 10 minutes | 114 | 104 | 101 |
| T2 = 20 minutes | 120 | 110 | 100 |
| T3 = 30 minutes | 137 | 124 | 107 |
| T4 = 40 minutes | 204 | 132 | 113 |
| T5 = 50 minutes | 393 | 146 | 124 |
| T6 = 60 minutes | 694 | 175 | 130 |
| T7 = 70 minutes | >3000 | 193 | 138 |
| T8 = 80 minutes | | 331 | 143 |
| T9 = 90 minutes | | 751 | 147 |
| T10 = 100 minutes | | >3000 | 196 |
| T11 = 110 minutes | | | 438 |
| T12 = 120 minutes | | | >3000 |

Concernant les caractéristiques de viscosité des compositions adhésives, on peut remarquer que la composition C'-1 a une viscosité qui évolue très vite. Elle évolue à 200 % en 40 minutes à 60°C. Concernant les caractéristiques de viscosité de la composition adhésive H-1 selon le premier mode de réalisation de l'invention et de la composition adhésive I-1 selon le deuxième mode de réalisation de l'invention, on observe que les viscosités évoluent plus lentement que la composition témoin C'-1. Les 200% sont atteints au-delà des 70 minutes et bien au-delà des 100 minutes.

En conclusion, les résultats de ces différents essais démontrent clairement que les compositions adhésives selon l'invention constituent une alternative intéressante à l'emploi des compositions adhésives conventionnelles et ce, sans l'utilisation de formaldéhyde.

## Revendications

1. Composition adhésive aqueuse, **caractérisée en ce qu'**elle comporte une résine thermodurcissable à base :
- d'au moins un composé aromatique A1 comprenant au moins un noyau aromatique porteur d'au moins deux fonctions, l'une de ces fonctions étant une fonction aldéhyde ou une fonction hydroxyméthyle, l'autre étant une fonction aldéhyde ou une fonction hydroxyméthyle;
- d'au moins un polyphénol aromatique A2 comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé organique G choisi dans le groupe constitué par les monosaccharides G1 ou les oligosaccharides G2 ;
dans laquelle le composé A1 répond à la formule générale (I) :
B-Ar-C (I)
où Ar représente un noyau aromatique et B, C représentent respectivement CHO ou CH₂OH avec Ar étant un noyau aromatique à 5 ou 6 chaînons.

2. Composition selon la revendication précédente, comprenant en outre un phénol substitué ou non par un unique groupement alkyle ou par un unique groupement alcényle, et/ou au moins un composé aromatique hydrocarboné A3 comprenant au moins deux noyaux aromatiques porteurs d'une seule fonction hydroxyle, étant entendu qu'au moins une des positions ortho ou para de chaque noyau aromatique est non substituée.

3. Composition selon l'une quelconque des revendications précédentes, dans laquelle le composé aromatique A1 répond à la formule générale (II) : 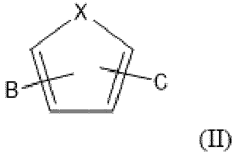 où B et C représentent respectivement CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment l'un de l'autre, un hydrogène, un groupe alkyle, aryle, arylalkyle, alkylaryle ou cycloalkyle.

4. Composition selon l'une quelconque des revendications précédentes, dans laquelle le polyphénol aromatique A2 est choisi dans le groupe constitué par le résorcinol, le phloroglucinol, le 2,2',4,4'-tétrahydroxydiphényl sulfide, la 2,2',4,4'-tétrahydroxybenzophenone , et les mélanges de ces composés, avantageusement le phloroglucinol.

5. Composition selon l'une quelconque des revendications 1 à 4, dans laquelle est le monosaccharide G1 est choisi dans le groupe constitué par le fructose, le glucose, le xylose, l'erythrose et les mélanges de ces composés.

6. Composition l'une quelconque des revendications 1 à 4, dans laquelle l'oligosaccharide G2 est choisi dans le groupe constitué par le saccharose, des oligomères de glucose et de fructose et les mélanges de ces composés.

7. Composition selon l'une quelconque des revendications 2 à 6, dans laquelle le phénol substitué ou non par un unique groupement alkyle est choisi dans le groupe constitué par le phénol, l'ortho crésol, le méta crésol, le para crésol ou un mélange de ces composés.

8. Composition selon l'une quelconque des revendications 2 à 6, dans laquelle le composé aromatique hydrocarboné A3 répond à la formule générale (X) : 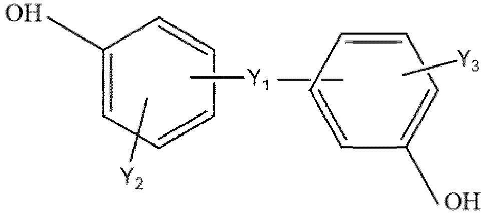 où Y1 représente un groupe alkyle, aryle, arylalkyle, alkylaryle, cycloalkyle ou alcényle, ces groupes étant substitués, Y2 et Y3 sont identiques ou différents et représentent H ou un groupe éther.

9. Composition selon la revendication précédente, dans laquelle Y2 et Y3 sont en position ortho de la fonction hydroxyle et représentent H ou OY4 où Y4 représente un groupe alkyle, aryle, arylalkyle, alkylaryle, cycloalkyle ou alcényle et de préférence CH3.

10. Composition selon la revendication 8 ou 9, dans laquelle le composé aromatique hydrocarboné A3 comprend au moins deux noyaux aromatiques porteurs d'une seule fonction hydroxyle, étant entendu qu'une des positions ortho de chacun des noyaux aromatiques porteurs d'une seule fonction hydroxyle est non substituée.

11. Composition selon la revendication 8 ou 9, dans laquelle le composé aromatique hydrocarboné A3 est choisi dans le groupe constitué par le bisphénol-A, la lignine ou un mélange de ces composés.

12. Composition selon l'une quelconque des revendications 2 à 11, dans laquelle la résine thermodurcissable est obtenue par mélangeage :
- du composé aromatique A1,
- du polyphénol aromatique A2 ;
- du composé organique G choisi dans le groupe constitué par les monosaccharides G1 ou les oligosaccharides G2 ; et
- du phénol substitué ou non par un unique groupement alkyle ou par un unique groupement alcényle et/ou du composé aromatique A3 ;
dans un solvant basique ayant de préférence un pH compris entre 9 et 14, plus préférentiellement entre 10 et 12.

13. Utilisation d'une composition adhésive selon l'une quelconque des revendications 1 à 12 pour le collage d'au moins deux éléments cellulosiques, avantageusement d'au moins deux éléments en bois.

14. Procédé de collage d'au moins deux éléments cellulosiques, avantageusement deux éléments en bois, dans lequel :
- on applique une couche de la composition adhésive aqueuse selon l'une quelconque des revendications 1 à 12 sur au moins l'un des éléments, et,
- on joint les éléments les uns aux autres par l'intermédiaire de la couche de la composition adhésive aqueuse.

15. Assemblage collé de deux éléments, avantageusement en bois, comprenant une couche de la composition adhésive aqueuse selon l'une quelconque des revendications 1 à 12 joignant au moins un des éléments à l'autre.

## Patentansprüche

1. Wässrige Klebstoffzusammensetzung, **dadurch gekennzeichnet, dass** sie ein wärmehärtbares Harz auf Basis von
- mindestens einer aromatischen Verbindung A1 mit mindestens einem aromatischen Kern, der mindestens zwei Funktionen trägt, wobei es sich bei einer dieser Funktionen um eine Aldehydfunktion oder eine Hydroxymethylfunktion handelt und es sich bei der anderen um eine Aldehydfunktion oder eine Hydroxymethylfunktion handelt;
- mindestens einem aromatischen Polyphenol A2 mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind; und
- mindestens einer organischen Verbindung G, die aus der Gruppe bestehend aus Monosacchariden G1 oder Oligosacchariden G2 ausgewählt ist;
umfasst, wobei die Verbindung A1 der allgemeinen Formel (I) entspricht:
B-Ar-C (I)
wobei Ar für einen aromatischen Kern steht und B und C jeweils für CHO oder CH₂OH stehen, wobei Ar ein 5- oder 6-gliedriger aromatischer Kern ist.

2. Zusammensetzung nach dem vorhergehenden Anspruch, außerdem umfassend ein durch eine einzige Alkylgruppe oder durch eine einzige Alkenylgruppe substituiertes oder unsubstituiertes Phenol und/oder mindestens eine aromatische Kohlenwasserstoffverbindung A3 mit mindestens zwei aromatischen Kernen, die eine einzige Hydroxylfunktion tragen, mit der Maßgabe, dass mindestens eine der ortho- oder para-Positionen jedes aromatischen Kerns unsubstituiert ist.

3. Zusammensetzung nach einem der vorhergehenden Ansprüche, wobei die aromatische Verbindung A1 der allgemeinen Formel (II) entspricht: 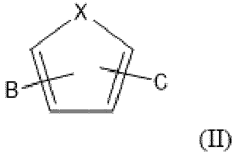 wobei B und C jeweils für CHO oder CH₂OH stehen, X für O, NR₁, NO, S, SO, SO₂, SR₂R₃ steht, R₁ für Wasserstoff, eine Alkyl-, Aryl-, Arylalkyl-, Alkylaryl- oder Cycloalkylgruppe steht und R₂, R₃ jeweils unabhängig voneinander für Wasserstoff, eine Alkyl-, Aryl-, Arylalkyl-, Alkylaryl- oder Cycloalkylgruppe stehen.

4. Zusammensetzung nach einem der vorhergehenden Ansprüche, wobei das aromatische Polyphenol A2 aus der Gruppe bestehend aus Resorcinol, Phloroglucinol, 2,2',4,4'-Tetrahydroxydiphenylsulfid, 2,2',4,4'-Tetrahydroxybenzophenon und Mischungen dieser Verbindungen, vorteilhafterweise Phloroglucinol, ausgewählt ist.

5. Zusammensetzung nach einem der Ansprüche 1 bis 4, wobei das Monosaccharid G1 aus der Gruppe bestehend aus Fructose, Glucose, Xylose, Erythrose und Mischungen dieser Verbindungen ausgewählt ist.

6. Zusammensetzung nach einem der Ansprüche 1 bis 4, wobei das Oligosaccharid G2 aus der Gruppe bestehend aus Saccharose, Oligomeren von Glucose und Fructose und Mischungen dieser Verbindungen ausgewählt ist.

7. Zusammensetzung nach einem der Ansprüche 2 bis 6, wobei das durch eine einzige Alkylgruppe substituierte oder unsubstituierte Phenol aus der Gruppe bestehend aus Phenol, ortho-Kresol, meta-Kresol, para-Kresol oder einer Mischung dieser Verbindungen ausgewählt ist.

8. Zusammensetzung nach einem der Ansprüche 2 bis 6, wobei die aromatische Kohlenwasserstoffverbindung A3 der allgemeinen Formel (X) entspricht: 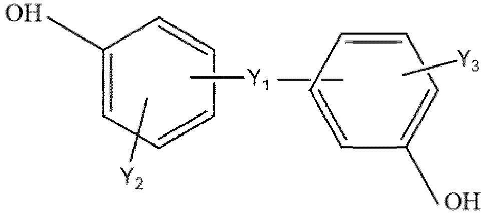 wobei Y1 für eine Alkyl-, Aryl-, Arylalkyl-, Alkylaryl-, Cycloalkyl- oder Alkenylgruppe steht, wobei diese Gruppen substituiert sind, und Y2 und Y3 gleich oder verschieden sind und für H oder eine Ethergruppe stehen.

9. Zusammensetzung nach dem vorhergehenden Anspruch, wobei Y2 und Y3 in ortho-Position zu der Hydroxylfunktion stehen und für H oder OY4 stehen, wobei Y4 für eine Alkyl-, Aryl-, Arylalkyl-, Alkylaryl-, Cycloalkyl- oder Alkenylgruppe und vorzugsweise CH3 steht.

10. Zusammensetzung nach Anspruch 8 oder 9, wobei die aromatische Kohlenwasserstoffverbindung A3 mindestens zwei aromatische Kerne umfasst, die eine einzige Hydroxylfunktion tragen, mit der Maßgabe, dass eine der ortho-Positionen jedes der aromatischen Kerne, die eine einzige Hydroxylfunktion tragen, unsubstituiert ist.

11. Zusammensetzung nach Anspruch 8 oder 9, wobei die aromatische Kohlenwasserstoffverbindung A3 aus der Gruppe bestehend aus Bisphenol-A, Lignin oder einer Mischung dieser Verbindungen ausgewählt ist.

12. Zusammensetzung nach einem der Ansprüche 2 bis 11, wobei das wärmehärtbare Harz erhalten wird durch Mischen:
- der aromatischen Verbindung A1;
- des aromatischen Polyphenols A2;
- der organischen Verbindung G, die aus der Gruppe bestehend aus Monosacchariden G1 oder Oligosacchariden G2 ausgewählt ist; und
- des durch eine einzige Alkylgruppe oder durch eine einzige Alkenylgruppe substituierten oder unsubstituierten Phenols und/oder der aromatischen Verbindung A3;
in einem basischen Lösungsmittel, das vorzugsweise einen pH-Wert zwischen 9 und 14, weiter bevorzugt zwischen 10 und 12 aufweist.

13. Verwendung einer Klebstoffzusammensetzung nach einem der Ansprüche 1 bis 12 zum Verkleben von von mindestens zwei Celluloseelementen, vorteilhafterweise von mindestens zwei Elementen aus Holz.

14. Verfahren zum Verkleben von mindestens zwei Celluloseelementen, vorzugsweise zwei Elementen aus Holz, bei dem man:
- auf mindestens eines der Elemente eine Schicht der wässrigen Klebstoffzusammensetzung nach einem der Ansprüche 1 bis 12 aufbringt und
- die Elemente über die Schicht der wässrigen Klebstoffzusammensetzung miteinander verbindet.

15. Klebverbund aus zwei Elementen, vorzugsweise aus Holz, umfassend eine Schicht der wässrigen Klebstoffzusammensetzung nach einem der Ansprüche 1 bis 12, die mindestens eines der Elemente mit dem anderen verbindet.

## Claims

1. Aqueous adhesive composition, **characterized in that** it comprises a thermosetting resin based on:
- at least one aromatic compound A1 comprising at least one aromatic ring bearing at least two functions, one of these functions being an aldehyde function or a hydroxymethyl function and the other being an aldehyde function or a hydroxymethyl function;
- at least one aromatic polyphenol A2 comprising at least one aromatic ring bearing at least two hydroxyl functions in the meta position relative to one another, the two positions ortho to at least one of the hydroxyl functions being unsubstituted; and
- at least one organic compound G selected from the group consisting of monosaccharides G1 or oligosaccharides G2.

2. Composition according to the preceding claim, further comprising a phenol optionally substituted by a single alkyl group or by a single alkenyl group, and/or at least one aromatic hydrocarbon compound A3 comprising at least two aromatic rings bearing a single hydroxyl function, it being understood that at least one of the ortho or para positions of each aromatic ring is unsubstituted.

3. Composition according to either one of the preceding claims, wherein the aromatic compound A1 corresponds to the general formula (II): 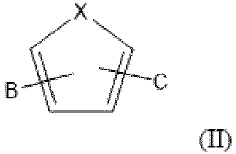 where B and C respectively represent CHO or CH₂OH, X represents O, NR₁, NO, S, SO, SO₂ or SR₂R₃, R₁ represents a hydrogen or an alkyl, aryl, arylalkyl, alkylaryl or cycloalkyl group and R₂ and R₃ each represent, independently of one another, a hydrogen or an alkyl, aryl, arylalkyl, alkylaryl or cycloalkyl group.

4. Composition according to any one of the preceding claims, wherein the aromatic polyphenol A2 is selected from the group consisting of resorcinol, phloroglucinol, 2,2',4,4'-tetrahydroxydiphenyl sulfide, 2,2',4,4'-tetrahydroxybenzophenone and the mixtures of these compounds, advantageously phloroglucinol.

5. Composition according to any one of Claims 1 to 4, wherein the monosaccharide G1 is selected from the group consisting of fructose, glucose, xylose, erythrose and mixtures of these compounds.

6. Composition according to any one of Claims 1 to 4, wherein the oligosaccharide G2 is selected from the group consisting of sucrose, oligomers of glucose and of fructose and mixtures of these compounds.

7. Composition according to any one of Claims 2 to 6, wherein the phenol optionally substituted by a single alkyl group is selected from the group consisting of phenol, ortho-cresol, meta-cresol, para-cresol or a mixture of these compounds.

8. Composition according to any one of Claims 2 to 6, wherein the aromatic hydrocarbon compound A3 corresponds to the general formula (X): 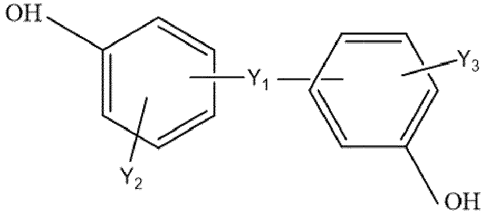 where Y1 represents an alkyl, aryl, arylalkyl, alkylaryl, cycloalkyl or alkenyl group, these groups being substituted, and Y2 and Y3 are identical or different and represent H or an ether group.

9. Composition according to the preceding claim, wherein Y2 and Y3 are in the position ortho to the hydroxyl function and represent H or OY4 where Y4 represents an alkyl, aryl, arylalkyl, alkylaryl, cycloalkyl or alkenyl group and preferably CH3.

10. Composition according to Claim 8 or 9, wherein the aromatic hydrocarbon compound A3 comprises at least two aromatic rings bearing a single hydroxyl function, it being understood that one of the ortho positions of each of the aromatic rings bearing a single hydroxyl function is unsubstituted.

11. Composition according to Claim 8 or 9, wherein the aromatic hydrocarbon compound A3 is selected from the group consisting of bisphenol-A, lignin or a mixture of these compounds.

12. Composition according to any one of Claims 2 to 11, wherein the thermosetting resin is obtained by mixing:
- the aromatic compound A1,
- the aromatic polyphenol A2;
- the organic compound G selected from the group consisting of monosaccharides G1 or oligosaccharides G2; and
- the phenol optionally substituted by a single alkyl group or by a single alkenyl group and/or the aromatic compound A3;
in a basic solvent preferably having a pH of between 9 and 14 and more preferentially between 10 and 12.

13. Use of an adhesive composition according to any one of Claims 1 to 12 for the adhesive bonding of at least two cellulosic elements, advantageously of at least two elements made of wood.

14. Process for adhesively bonding at least two cellulosic elements, advantageously two elements made of wood, wherein:
- a layer of the aqueous adhesive composition according to any one of Claims 1 to 12 is applied to at least one of the elements, and
- the elements are joined to one another via the layer of aqueous adhesive composition.

15. Adhesively bonded assembly of two elements, advantageously made of wood, comprising a layer of the aqueous adhesive composition according to any one of Claims 1 to 12 joining at least one of the elements to the other.
